# EUROPÄISCHE PATENTSCHRIFT

(11) **EP 1 866 383 B1**
(45) Veröffentlichungstag und Bekanntmachung des Hinweises auf die Patenterteilung: **29.10.2008**
(21) Anmeldenummer: 05776168.6
(22) Anmeldetag: 16.08.2005
(51) Int. Cl.: C09C 3/04, C09C 1/00, C09C 1/34, B02C 17/20, B02C 17/22

(54) **PIGMENT AUF RUTIL-BASIS UND EIN VERFAHREN ZU SEINER HERSTELLUNG**
RUTILE-BASED PIGMENT AND A METHOD FOR THE PRODUCTION THEREOF
PIGMENT A BASE DE RUTILE ET SON PROCEDE DE FABRICATION

(30) Priorität: 20.08.2004 DE 102004040384
(43) Veröffentlichungstag der Anmeldung: 19.12.2007
(73) Patentinhaber: Heubach GmbH, 38685 Langelsheim (DE)
(72) Erfinder: HEUBACH, Rainer, A-5084 Grossgmain (AT)
(74) Vertreter: Hagemann, Heinrich
(86) Internationale Anmeldenummer: PCT/EP2005/008892
(87) Internationale Veröffentlichungsnummer: WO 2006/021354

(56) Entgegenhaltungen:
- WO-A-20/05049496
- DE-A1- 10 309 813
- US-A- 5 171 631

## Beschreibung

Die Erfindung betrifft feinteilige, brillante und hochdeckende Pigmente auf Rutil-Basis ohne Eintrag von Verunreinigungen durch reaktive Metallbestandteile sowie ein Verfahren zur Herstellung solcher Pigmente.

Nickel-Antimon-Titangelbpigmente sind von Natur her schwach gelbe Pigmente mit hoher Opazität. Durch Überfärben mit hochwertigen organischen Pigmenten lassen sich hochsaturierte Volltonfarbtöne erzielen, mit denen sich das gesamte Farbspektrum - mit Ausnahme von Blau- und Violettfarbtönen - abdecken lässt. Durch diese Überfärbungen ergibt sich eine Synergie der relativ hohen Deckkraft der preisgünstigen Nickel-Antimon-Titangelbe mit der hohen Farbstärke der in der Regel recht teuren organischen Überfärbungspigmente.

Dieser Effekt lässt sich auch mit Titanweiß erzielen, wobei allerdings Überfärbungen immer zu stärkeren Aufhellungen, also zu einer geringeren Saturierung aufgrund der starken Weißfärbekraft von Titanweißpigmenten, führen. Ein weiterer Nachteil von Titanweißüberfärbungen liegt in der photokatalytischen Wirkung von Titanweißpigmenten, die zu einer starken Beeinträchtigung der Licht- und Wetterechtheit der teuren organischen Farbkomponenten führt. Infolgedessen "altern". Titanweißbasierende Vollfarbtöne etwa viermal so schnell wie Mischungen der gleichen organischen Farbkomponenten mit Nickel-Antimon-Titangelb.

Dieser entscheidende Gebrauchsnutzen der Nickel-Antimon-Titangelbe wurde bisher nur selten in Anspruch genommen, weil die zurzeit im Markt verfügbaren Nickeltitangelbpigmente abrasiv (kornhart und scharfkantig), schlecht im Glanz und im Vergleich zu Titanweiß in der Deckfähigkeit unterlegen sind. Darüber hinaus ist auf den folgenden ökonomischen Hintergrund zu verweisen:
Nickel-Antimon-Titangelbe weisen relativ geringe Marktanteile unter Titanpigmenten auf, wie folgende Zahlen zeigen: Weltmarkt Titanweiß: 4.000.000 t, Weltmarkt Titangelbe: 20.000 t, davon Chrom-Antimon-Titangelb: 16.000 t, davon Nickel-Antimon-Titangelb: 4.000 t.

Zwischen der Jahrestonnage Chrom- vs. Nickel-Antimon- Titangelb besteht ein Missverhältnis. Nickel-Antimon-Titangelbe können als Buntpigmente die sich infolge der sich seit 1980 stetig verschärfenden Gefahrstoff- und Umwelt-Gesetzgebung bietende Chance, 100.000 Jato Bleisulfochromat- und Molybdatrot-Pigmente zu ersetzen, nur unzureichend nutzen. Die Ursache hierfür liegt in den für unabänderlich angesehenen Mängeln, die sich insbesondere durch die vorgeblich im Vergleich zu Titanweiss sowie Chrom- und Cadmiumgelben nicht ausreichende Deckkraft (Opazität), durch mangelnden Glanz und hohe Abrasivität ausdrücken.

Diese drei Mängel beruhen auf ein und derselben Ursache, nämlich einer zu hohen durchschnittlichen Teilchengröße vornehmlich der Nickel-Antimon-Titangelbe, die bei den besten im Markt angebotenen Qualitäten bei durchschnittlich 1000 - 2000 nm liegt, während die optimale Deckkraft eines pigmentären Farbmittels bei einer Teilchengröße von 300 nm sowie bei optimierter Kornform und -oberfläche erzielt wird. Bereits oberhalb von 500 nm mittlerem Teilchendurchmesser verliert ein Pigment etwa 20 % an Deckfähigkeit. Feinere handelsübliche Typen nach dem Stand der Technik sind regelmässig schwach dotiert und stark aufgeweisst, zudem infolge ihres hohen Mahlaufwandes teuer, hochdotierte, hochgebrannte Produkte sind unbekannt, da sie inkonsistenzen bei der Koloristik aufweisen.

Eine Oberflächenvergrößerung unter einen mittleren Teilchendurchmesser von 300 nm ist für Farbpigmente zu vermeiden, da sie bei Unterschreiten eines Teilchendurchmessers von etwa der halben Wellenlänge des von ihnen remittierten Lichts transparent werden, was für die Anwendungen von Nickel-Antimon-Titangelb-Pigmenten unerwünscht ist. Bei der großen Härte der Teilchen wird die Abrasivität bei spitzen und scharfkantigen Partikeln vergrößert. Ziel ist es daher auch, isometrische Teilchen (Rhomben) herzustellen, die Anfasungen bzw. an den Ecken stumpfwinklige Abflachungen bzw. Abrundungen aufweisen. Dieses ist nicht durch eine im Zusammenspiel mit oberflächenaktiven Stoffen wie ein Gleitmittel wirkende Beschichtung nach der DE-A-2 936 746, die zudem einen eigenen Bearbeitungsschritt und den Einsatz von Hilfsstoffen als Erfindungsgegenstand fordert, zu erzielen.

Dennoch sollen zur Vermeidung von Farbeffekten bei unterschiedlicher Beleuchtungsart (Metamerie) eine relativ glatte Oberfläche und zudem die ungefähre Gleichheit der (projizierten) Kantenlängen erzielt werden; eine Kugelform stellt sich jedoch als unter allen Bedingungen unerreichbar heraus.

Unter Berücksichtigung der vorstehenden Ausführungen soll auf den relevanten Stand der Technik eingegangen werden:
Eine mittlere Teilchengröße von 300 nm wurde bisher für hochdotierte und/oder hochgeglühte Nickel- oder Chrom- Antimonrutilgelb- Pigmente (TiO₂ < 87%) von keinem Hersteller mit befriedigenden Ergebnissen erreicht. Die Patentschrift DE-A- 3 202 158 beschreibt insbesondere Chrom-Antimontitangelbe. In der Tat führen die dort beschriebenen geringen Dotierungen u.a. mit Antimon und Chrom unter niedrigen Brenntemperaturen < 1000°C bei folgender Nassvermahlung in Perlmühlen zu einem Pigment mit einer engen Korngrössenverteilung und entsprechender Feinheit, teilweise auch dem weicheren Korn der dort beschriebenen Mischphasen-oxidpigmente geschuldet. Der Farbtongestaltung sind hierbei jedoch ebenso Grenzen gesetzt, wie der reaktive Eisengehalt unkontrollierbare Höhen annehmen kann, sofern nicht wie hier erfindungsgemäss eine nichtmetallisch resistent ausgekleidete Mühle verwendet wird. Dennoch muss man bei einem Produkt nach Stand der Technik gem. DE-A- 3 202 158 eine erhöhte Photoaktivität und beim entsprechenden hochfeinen Vermahlen eine starke Aufweissung in Kauf nehmen. Lässt man Eisenabrieb im Mahlvorgang zu, vergraut das Material und führt u.a. zu Störungen in Matrices auf PVC-Basis. Dies trifft selbst für Mischphasenoxidpigmente auf Rutilbasis zu, die Eisen als nicht reaktive Komponente im Kristallgitter des Rutils gebunden enthalten, wie in Beispiel 3 der DE-A-3 202 158.

Gemäß der Lehre der DE-A-3 202 158 wird eine koloristisch günstige Korngrößenverteilung erzielt, wenn man niedrige Dotierung, relativ niedrige Brenntemperatur und Nassvermahlung kombiniert. Diese Anmeldung macht jedoch keine Angaben zur Korngrößenverteilung und spezifiziert die Vermahlart nur ungenau.

Bei Titandioxid hat die Synthese beim Chloridverfahren (s. u.a.: Winkler, J: "Titanium Dioxide", Hannover: Vincentz, 2003; ISBN 3-87870-148-9; S.35-37; 51-58) mit der Einstellung des TiCl₄ -Brenners sowie der Zumischung von agglomerationsverhinderndem Sand im anschließenden Kühl- und Förderprozess einen praktikablen Weg zur Einstellung optimierter Partikelgrößenverteilungen (d₅₀ = ca. 280 nm für Licht von 550 nm Wellenlänge) bereits gefunden. Obwohl bei diesem Verfahren zur "Rutilisierung" geringe Mengen an Aluminiumchlorid zum Titantetrachlorid dosiert werden, wobei offen ist, wie viele Gitterplätze im Rutil wirklich durch Aluminiumionen belegt werden, ist diese Methode z.B. durch Zugabe von Antimon- und Nickelchloriden zu Titantetrachlorid vor dem Brennerstrahl nicht erfolgversprechend. Es wird Separierung und inhomogene Verflüchtigung von Metallchloriden und Metalloxychloriden vor dem Gittereinbau der Metallionen beobachtet. Eine längere Nachbrenndauer führt zu Reagglomeration.

Im Stand der Technik ist die Firma Ishihara besonders aktiv. Dies zeigt sich durch weltweite Patentanmeldungen. Hierzu zählt beispielsweise die EP 1 245 646 (A1, entspricht US-A-6 576 052), bei der ein feinteilig aus dem Chloridprozess gewonnenes TiO₂ von bereits 100 bis 400 nm mittlerer Korngröße während einer Siloxan-Nachbehandlung und Beschichtung mit Aluminiumphosphat über eine Strahlmühle auf eine entsprechend feine Primärkorngröße nachvermahlen wird. Nach der EP-A-1 273 555 (entspricht US 6 616 746) wird eine gleichartige Kornfeinheit des Rohpigmentes zur Beschichtung mit mehrwertigen Alkoholen sowie hydrolysierten Aminosilanen und/oder Aluminiumhydroxid genutzt. Es wird auf gleiche Weise wie vorstehend verfahren. Beansprucht wird eine gute Dispergierbarkeit der photostabilisierten Produkte. Zur Vermahlung wird das Pigment nach oder während der Zugabe der Beschichtungs-und Stabilisierungsreagenzien bei einer Temperatur von 120 bis 300 °C in einer Strahlmühle oder eines ähnlichen "Fluiddynamischen Mühle" zerkleinert, die eine Hydrolysereaktion der Aminosiloxane und anderer Reaktivkomponenten gestattet und während des Beschichtungsvorganges jede Reagglomeration verhindert. Dieses Patent bezieht sich nur auf TiO₂ in Rutilmodifikation (die durch die Aluminiumzusätze bevorzugt gebildet wird). Die Beschichtung soll nach Aufarbeitung des Mahlansatzes prinzipiell agglomerations-verhindernd sowie photostabilisierend wirken, d.h. die photokatalytischen Wirkungen des Pigmentes nachhaltig mindern.

Nassvermahlung von Rutilen, also auch Rutilgelb-Pigmenten, in Perlmühlen mit hohem Leistungseintrag gilt z.B. gemäß der DE-A-3 930 098 als Stand der Technik. Diese werden von verschiedenen Fachfirmen angeboten.

Die in z.B. der DE-A-4 106 003 ausgeführte Möglichkeit, durch "Anlegieren" des Brennansatzes für ein Rutilbraun-Pigment mit geringen Mengen Cer u.a. einen a priori feineren Kornaufbau zu erzielen und so einen Mahlgang einzusparen, lässt sich bei Chrom- und Nickeltitanpigmenten wegen der gegen Dotierungsschwankungen empfindlicheren helleren Farbtöne nicht realisieren.

Grundsätzlich scheinen manche Firmen eine Nassfällung vor der eigentlichen Brennsynthese des Pigmentes zu bevorzugen und damit einen "wet precursor" zu schaffen, dem bereits die Kornverteilung und somit die Feinheit eingeprägt sind, was sogar bis nach der Calcination und abschließenden Feinstvermahlung erhalten bleibt. Die Hydroxylgruppen an der Oberfläche der frisch ausgefällten Oxide und Hydroxide stellen eine gute Vorstufe für die diffusive Durchdringung des zudem fehlstellenreichen Rutilgitters mit Fremdmetallionen nach Verdampfen des Wassers oberhalb von 150°C dar. Allerdings sind die durch die geringere Brenntemperatur möglichen feineren Korngrössen nicht von reproduzierbarer Farbstärke. Der Durchmesser schwankt noch immer zwischen 800 und 1200 nm.

Ausgehend von dem vorstehend geschilderten Stand der Technik lag der Erfindung die Aufgabe zugrunde, ein feinteiliges, brillantes und hochdeckendes Pigment auf Rutil-Basis vorzuschlagen, das sich durch überlegene Deckkraft, Glanz sowie geringeren Abrasivität auszeichnet. Darüber hinaus soll es einen möglichst geringen bzw. keinen Gehalt an Eisen aufweisen, beispielsweise allenfalls im ppm-Bereich. Darüber hinaus soll die Erfindung ein Verfahren vorschlagen, mit dem ein derartiges Pigment in besonders günstiger Weise hergestellt werden kann.

Erfindungsgemäß wird diese Aufgabe durch ein feinteiliges, brillantes und hochdeckendes Pigment auf Rutil-Basis gelöst, das dadurch gekennzeichnet ist, dass es ein Nickel-Antimon-Rutilgelb einer Farbsättigung C* nach DIN 5033 von 52 bis 55 bei einem Farbtonwinkel von 96° bis 98° und eine Korngrößenverteilung mit Teilchendurchmessern zwischen 50 und 1000 nm und bei mono-, bi-, tri- oder oligomodaler Häufigkeitsverteilung ein Hauptmaximum zwischen 230 und 400 nm aufweist, wobei bei einer bi- oder mehrmodalen Häufigkeitsverteilung gegebenenfalls ein Nebenmaximum mit weniger als 25% des Hauptmaximums, zwischen 400 und 1000 nm, insbesondere zwischen etwa 400 und 900 nm, auftritt. Es wird besonders bevorzugt, wenn das angesprochene Hauptmaximum zwischen 280 und 340 nm und/oder das Nebenmaximum zwischen 480 und 800 nm liegt. Des Weiteren ist es bevorzugt, wenn der mittlere Teilchendurchmesser des Pigmentes zwischen 80 und 1000 nm, insbesondere zwischen 80 und 900 nm, liegt. Ganz besonders bevorzugt wird der Bereich von 120 bis 600 nm. Des Weiteren ist es im Einzelfall von Vorteil, wenn das Pigment eine asymmetrisch geformte mono-modale Häufigkeitsverteilung des Teilchendurchmessers mit einem Maximum zwischen 250 und 390 nm, insbesondere zwischen 280 und 340 nm aufweist.

Ersichtlich ist demzufolge die Teilchengröße der geschilderten Art als ein wesentliches Merkmal der vorliegenden Erfindung anzusehen. Dieses sei weitergehend technologisch erläutert: Es hat sich überraschenderweise gezeigt, dass die scharfe Korngrößenverteilung auf einem "Sockel" aufsitzen muss, der ggfs. auch Nebenmaxima in einer Höhe von bis zu 15 %, vornehmlich 5 %, aufweisen kann. Ohne dass diese Erklärung als einschränkend oder erschöpfend gelten soll, ist diese spezielle Ausbildung einer stark asymmetrischen, bi- oder oligomodalen Kornverteilung bzw. einer "tiefliegenden Schleppe" zur Erzielung optimaler Brillanz und Sättigung auf die Notwendigkeit zurückzuführen, eine optimale Raumerfüllung in der Matrix durch Annäherung eines gewissen Anteiles des Pigmentes an die "Fuller-Kurve" zu gewährleisten. Feinstanteile zu kleinen Durchmessern (150 nm < D < 250 nm) hin wiederum können, sofern sie in der Minderzahl bleiben, durchaus die Absorptionskante des Pigmentes durch stärkere Absorption steiler gestalten, was ebenso die Verstärkung der Raleigh'schen Streuung bewirkt, was in einer verbesserten Brillanz resultiert.

Die Kornform muss zusätzlich den erforderlichen "Feinschliff` bekommen, um sich optimal in eine Matrix einarbeiten zu lassen, den Glanz verbessern und die üblichen anwendungstechnischen Werkzeuge zu schonen. Dies kann bei dem nachfolgend noch geschilderten erfindungsgemäßen Verfahren durch Zusetzen von Hilfsmitteln effektiv und in dem gleichen Arbeitsschritt erfolgen. Hierbei wird die Kornoberfläche durch das gewählte Verfahren und geeignete Mahlzusätze sowie Beschichtungen zur runden Form hin abgeschliffen, was die Abrasivität der Partikel mindern hilft und die Fließfähigkeit hoch-pigmentierter Präparationen in der späteren Anwendung verbessern hilft. Die Agglomerationstendenz feiner Rutilpigmente wird hier effektiv in der Entstehung, d.h. bereits im Mahlansatz, worauf noch eingegangen wird, bekämpft werden.

Die Erfindung in ihrer Abstraktheit umfasst insbesondere ein hochdotiertes, hoch geglühtes Nickel-Antimon-Rutilgelb.

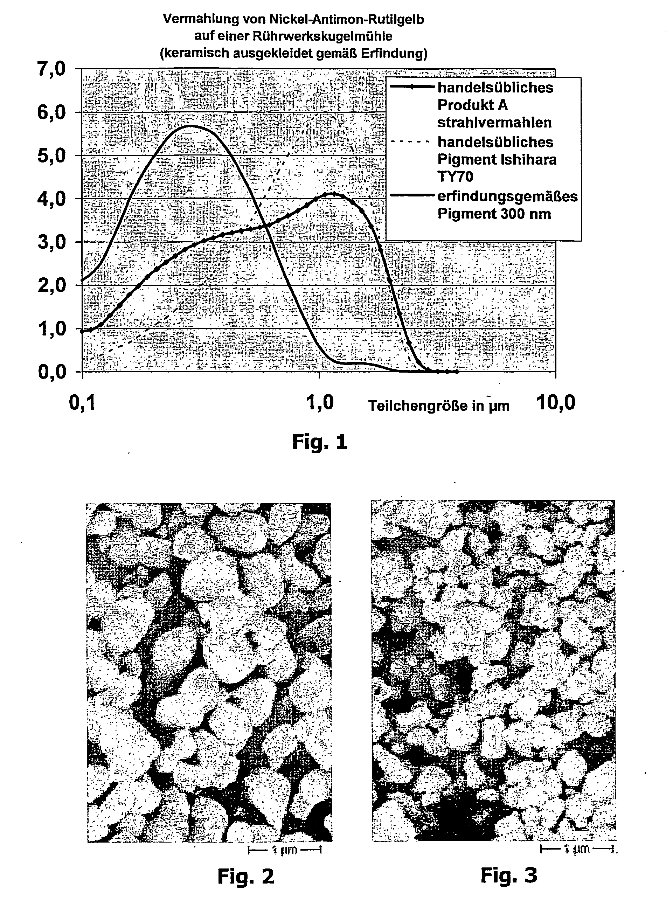

Die erfindungsgemäßen feinteiligen, brillanten und hochdeckenden Pigmente auf Rutil-Basis bewirken auch überragende Glanzwerte. Ein Pigment gemäß der Erfindung zeichnet sich dadurch aus, dass es nach DIN 67 530 einen 20°-Reflektometer-Glanzwert von mindestens 42 und einen 60°-Reflektometer-Glanzwert von mindestens 80 aufweist, insbesondere einen 20°-Reflektometer-Glanzwert von mindestens 50, insbesondere 55 bis 70, und einen 60°-Reflektometer-Glanzwert von mindestens 83, insbesondere 83 bis 93, aufweist. Von besonderem Wert ist das ausgezeichnete Deckvermögen der beanspruchten Pigmente. Diese zeichnen sich dadurch aus, dass das Deckvermögen nach DIN 55 987 mehr als 100%, bezogen auf eine Standard-Rutilpigment-Vergleichssubstanz, insbesondere mehr als 110% beträgt, und insbesondere zwischen 115 und 130% liegt. Die heute als Stand der Technik eingesetzte Trockenvermahlung sowie konventionelle Sand-Perlmühlen sind nicht geeignet, das erfindungsgemäße Pigment in der gekennzeichneten Art herzustellen. Diese bekannten Methoden erzielen nur durchschnittliche Teilchengrößen von 600 bis 1200 nm, was sich aus den Kurven der beiliegenden Fig. 1 ergibt. Darin stellt die gerippte Kurve ein handelsübliches Produkt A dar, das trocken-strahlvermahlen wurde, während die gestrichelte Kurve ein handelsübliches Nickel-Antimon-Titangelb "TY70" der Firma Ishihara darstellt, das konventionell mittels einer Perl- oder Strahlmühle vermahlen wurde. Die glatt durchgezogene Kurve bezieht sich auf ein Pigment gemäß der Erfindung. Es zeigt eine um 25% verbessertes Deckvermögen und einen erheblich verbesserten Glanz. Auf die Art der Herstellung wird nachfolgend noch eingegangen, wobei jedoch als Hinweis gesagt werden soll, dass dabei eine Mikromediamühle mit Mahlkörpern von 1,2 mm Durchmesser eingesetzt wurde. Die glatt durchgezogene Kurve der Fig. 1, die der Erfindung zuzuordnen ist, zeigt im Vergleich zu der gerippten und gestrichelten Kurve deutlich den Qualitätssprung. Der optimale Wert der Korngrößenverteilung bezüglich des Hauptmaximums zwischen etwa 230 und 400 nm könnte ein Grund für die aufgezeigten verbesserten Eigenschaften sein.

Im Zusammenhang mit der Fig. 1 ist noch auf die Fig. 2 bis 5 zu verweisen: Die Fig. 2, 3 und 4 stellen je eine elektronenmikroskopische Aufnahme der in Fig. 1 bezüglich der Teilchengröße dargestellten Produkte dar. Die Fig. 2 ist dem handelsüblichen Pigment Ishihara TY70, die Fig. 3 dem handelsüblichen Produkt A (strahlvermahlen) und die Fig. 3 den erfindungsgemäßen Nickel-Antimon-Rutilgelb-Pigmenten zuzuordnen. Der Vergleich zeigt, dass das erfindungsgemäße Pigment eine deutlich kleinere Teilchengröße aufweist.

Die vorliegende Erfindung erweist sich auch insofern als wertvoll, weil sie wegen der Schärfe der Korngrößenverteilung keine gleichmäßige Remissionserhöhung über alle Wellenlängen mehr aufweist, sondern im gelben Bereich des Spektrums (etwa 570 bis 600 nm) ein Maximum aufweist. Damit wird gleichzeitig verhindert, dass sich die b*-Werte übermäßig verringern, weil dann der Weißgrad (also die nichtwellenlängenspezifische Remission) übermässig zunähme.

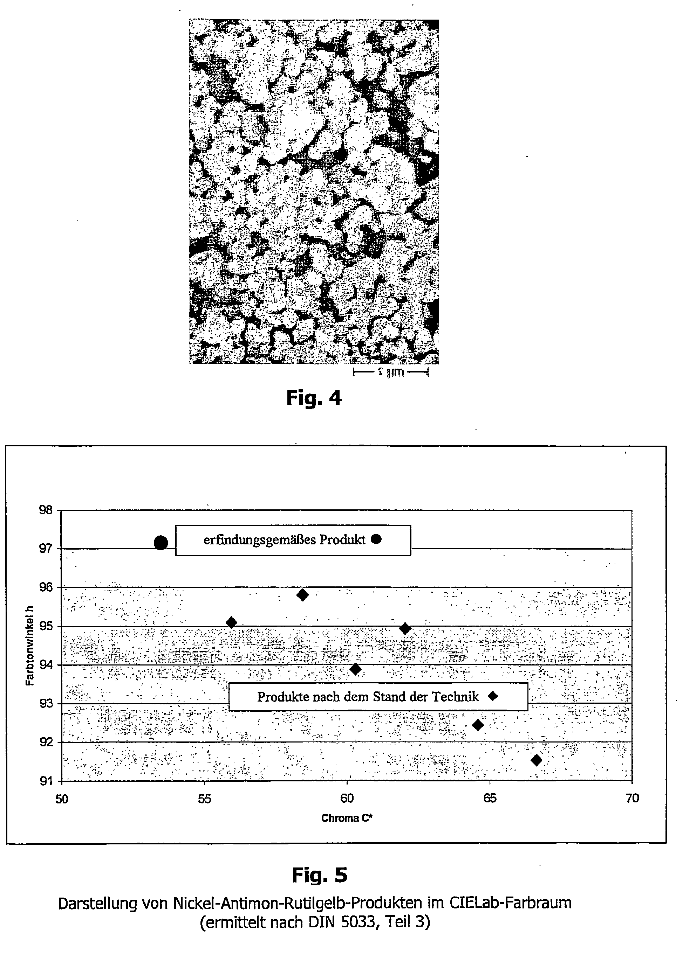

Die Fig. 5 stellt Nickel-Antimon-Rutilgelb-Produkte im CIELab-Farbraum dar. Daraus ist ersichtlich, dass die erfindungsgemäßen Pigmente gegenüber den Produkten nach dem Stand der Technik einen neuen Farbort erschließen. Dies zeigt zunächst, dass es ein sich von den Produkten des Standes der Technik unterscheidendes Erzeugnis ist. Andererseits wird durch die Erfindung das Spektrum an stabilen Pigmenten mit gelbem Ton erweitert. Von besonderem Vorteil ist es daher für die Nickel-Antimon-Rutilgelbe, dass der CIELab-Farbort nach DIN 5033 eine Farbsättigung C^{*} von 52 bis 55 bei einem Farbtonwinkel h von 96 bis 98° aufweist.

Gegenstand der vorliegenden Erfindung ist auch ein Verfahren zur Herstellung der Pigmente gemäß der Erfindung. Dieses ist dadurch gekennzeichnet, dass ein Nickel-Antimon-Rutilgelb mittels Hochleistungs-Vermahlung in wässriger Suspension in einer eisenfreien und resistent ausgekleideten Rührwerkskugelmühle so lange behandelt wird, bis sich die in der vorangehenden Beschreibung dargestellte Korngrößenverteilung eingestellt hat.

Bevorzugt weisen das Mahlaggregat und die Mahlwerkzeuge eine abriebbeständige und inerte Beschichtung auf. Vorzugsweise stellt das resistente Auskleidungsmaterial der (Hochleistungs-) Rührwerkskugelmühle ein inertes und abriebfestes keramisches Material dar, insbesondere in Form eines wärmeleitfähigen keramischen Materials zur Erleichterung der Kühlung. Alternativ wird es bevorzugt, dass das resistente Auskleidungsmaterial der Rührwerkskugelmühle einen inerten und abriebfesten Kunststoff darstellt, z.B. Polyurethan.

Weitere Ausführungen zu dem Verfahren: Es wird bevorzugt, dass in dem Mahlaggregat in zur Beschichtung analoger Weise resistente Mahlperlen eines Durchmessers von etwa 0,2 bis 1,7 mm, insbesondere von etwa 0,5 bis 1,2 mm, benutzt werden. Die Temperatur beim Feinstvermahlen liegt vorzugsweise zwischen etwa 20 und 90°C, insbesondere zwischen etwa 40 und 60°C. Zweckmäßig ist es des Weiteren, dass das Feinstvermahlen im Rahmen des erfindungsgemäßen Verfahrens in einem Rezirkulationsverfahren durchgeführt wird, wobei die durchschnittliche Verweilzeit des Mahlgutes in der Rührwerkskugelmühle 4 bis 44 min, insbesondere 10 bis 18 min, beträgt. Dabei ist es zweckmäßig, dass die Umfangsgeschwindigkeit des Rotors bei der Rührwerkskugelmühle 5 bis 19 m/s, insbesondere 10 bis 12 m/s beträgt. Auch der Füllgrad wird zweckmäßigerweise im Rahmen der Erfindung bedacht, um diese vorteilhaft auszugestalten. Dabei wird es bevorzugt, dass der Füllgrad der Rührwerkskugelmühle an Mahlkörper etwa 60 bis 90 Vol.-%, insbesondere etwa 70 bis 80 Vol.-% beträgt.

Im Einzelfall wird bevorzugt, dass dem erfindungsgemäßen Verfahren eine Vorzerkleinerung vorgeschaltet ist. Diese erfolgt zweckmäßigerweise in einer Kugelmühle aus ebenfalls resistentem Material, wobei ein Metallkontakt des Mahlgutes weitgehend ausgeschlossen ist. Dies ist ein Grund dafür, dass der Eisengehalt der erfindungsgemäßen Pigmente weitgehend ausgeschlossen wird. Das heißt mit anderen Worten, dass der Eisengehalt lediglich durch die Vorgaben der Rohstoffe bestimmt wird und somit allenfalls im ppm-Bereich liegt.

Zur Historie des erfindungsgemäßen Verfahrens ist auszuführen: Nachdem anfängliche Versuche mit hochdotiertem und hochgeglühtem Nickeltitangelb analog der Lehre der DE-A- 3 202 158 mit Hochleistungs-Rührwerkskugelmühlen an der unbefriedigenden Farbkonstanz gescheitert waren, wurde überraschenderweise gefunden, dass die Mahleffizienz in Verbindung mit chemisch und mechanisch resistent ausgekleideten Rührwerkskugelmühlen und keramischen Feinstmahlkörpern drastisch verbessert wird. Vorzugsweise soll die Auskleidung nichtmetallischen Charakter besitzen. Sie könnte aus Kunststoff bestehen, aber auch aus Keramik. Daher kann mit relativ geringem Mahlaufwand eine scharfe Korngrößenverteilung bei etwa 320 nm mittlerem Teilchendurchmesser nahe dem applikativen Optimum erzielt werden, wobei die Korngrößenverteilung zudem einen zielsetzungskonformen, steilen Verlauf aufweist.

Die oben angesprochene Umrüstung der Rührwerkskugelmühle bezüglich der metallfreien Auskleidungen war also von wesentlicher Bedeutung, um das neue erfindungsgemäße Nassmahlverfahren zum Erfolg zu führen. Die efindungsgemäßen Nickel-Antimon-Rutilgelb-Pigmente und auch das erfindungsgemäße Verfahren sind von besonderem Wert, was sich durch vielfältige Vorteile erweist: So kann die Mahleffizienz durch die bereits angesprochenen oberflächenaktiven Polymeren begünstigt werden, nämlich durch unterschiedlich substituierte Polysiloxanverbindungen sowie polar substituierte langkettige Alkane. Die Polysiloxane bewirken in der Hauptsache eine Hydrophobierung der an sich polaren Oberfläche des anorganischen Pigmentteilchens. Bei einem späteren Einarbeiten in unpolare Bindemittel (lösemittelhaltige Lacke) oder andere polymere Materialien (Polyolefine) führt die Hydrophobierung der Pigmentoberfläche zu einer deutlich schnelleren Wiederbenetzung und damit zu weniger Abrieberscheinungen. Hochdisperse Oxide von Silizium oder Aluminium erweisen sich unter den gewählten Mahlbedingungen als Lösung hydrodynamischer Probleme, neben der Einstellung einer optimalen Ionenstärke und damit Viskosität mit einem Salz einer Sauerstoffsäure von beispielsweise Schwefel oder Phosphor. Durch die angesprochenen Verbindungen kann man demzufolge in Optimierung des erfindungsgemässen Verfahrens dessen besonders vorteilhafte Steuerungsmöglichkeit erzielen.

Die vorliegende Erfindung überwindet die eingangs aufgezeigten Mängel von Nickel-Antimon-Titangelb-Pigmenten des Standes der Technik und führt optional durch einen modifizierten Finish-Prozess zu Gelbpigmenten mit einer erheblich verbesserten Deckkraft und einem wesentlich verbesserten Glanz, der dem von Titanweiß gleichwertig ist; gleichzeitig wird die Farbstärke gegenüber den niedrigdotierten, bei tieferer Reaktionstemperatur geglühten Rutilen verbessert, was anhand der Fig.5 deutlich erkennbar wird. Die Erfindung erschliesst somit aufgabengemäss einen neuen Anwendungsbereich für die hochdotierten Rutilpigmente.

Zusammenfassend lassen sich die Vorteile des erfindungsgemäßen Nickel-Antimon-Rutilgelb-Pigments wie folgt darstellen: Es zeichnet sich gegenüber dem Produkt des Standes der Technik durch verbesserten Glanz, geringen Weißgrad bzw. geringere Aufhellung, relativ hohe Farbtonsättigung sowie durch ein extrem hohes, in dieser Stoffklasse zuvor nicht nutzbares Deckvermögen, bei gleichzeitig gegenüber feinteiligen Rutilen nach dem Stand der Technik geringer Photoaktivität aus. Darüber hinaus zeigt es in der Praxis keine nachteilige Abrasivität und keine Wechselwirkung eventueller Mahlrückstände mit der Anwendungsmatrix. Insbesondere ist es im Wesentlichen frei von reaktiven Metallen oder Metallverbindungen, insbesondere von reaktiven Eisenverbindungen.

Die Erfindung wird nachfolgend anhand verschiedener Beispiele noch näher erläutert, wenngleich darin keine Einschränkung gesehen werden soll.

### Beispiel 1: Stufe 1: Vorzerkleinerung

Es ist von Vorteil, der Feinstvermahlung einen konventionellen Vorzerkleinerungsschritt vorzuschalten, um die Mahldauer zu begrenzen. Dieser kann sich nach folgenden Variationen gestalten, deren Mahlgutaustrag dann dem erfindungsgemäßen Prozess direkt zugeführt wird (das sind eigentlich Vorgänge nach dem Stand der Technik, die nur der Übersicht und der Demonstration der allgemeinen Anwendbarkeit der Erfindung dienen):

### Kugelmühle / Rollenbock

40%ige Suspension (4 kg Pigment und 6 I Wasser) des Rohpigments wird mit 25 mm-Keramik-Kugeln auf dem Rollenbock 60 bis 90 min vermahlen.

### Sandmühle:

Horizontale PU-ausgekleidete Sandmühle mit Ottawa-Sand oder Zirkon - Silikat - Mahlkugeln (Rimax) mit 2,5 bis 2,8 mm Durchmesser. Man fährt 1 bis 2 Passagen mit 600 bis 800kg 40%-Suspension pro Stunde. Die Temperatur muss dabei unter 60°C gehalten werden.

Eine Strahlmühle als Trockenvorzerkleinerung mit nachfolgender Aufschlämmung des Rohpigmentes zur 40% Suspension ist zwar sehr effektiv und verursacht keinen Abrieb, ist aber in der Handhabung umständlich und zeitaufwändig, daher teuer.

Korundscheibenmühle: Die Vorzerkleinerung der Rohpigmentteilchen in einer 40%igen Suspension hat einen zu geringen Durchsatz, kann aber versuchsweise zur Anwendung kommen.

### Beispiel 2: Stufe 2: Erfindungsgemäße Nassvermahlung

Die 10 kg der 40%igen Anschlämmung des Nickeltitan-Rohpigmentes aus Beispiel 1 werden mit 10%iger Schwefelsäure auf einen pH - Wert von 6 - 6,5 und ggf. durch Zugabe von Natriumsulfat-Lösung auf eine Leitfähigkeit von 2000 bis 2500 µS/cm eingestellt, um eine stabile, pumpfähige Suspension mit einer Viskosität von 600 - 700 mPa*s zu erhalten. Eingesetzt wird eine mit einem zu Kühlzwecken speziell wärmeleitfähigem Keramik- Material ausgekleidete Mühle Lehmann "FM 20".

### Beispiel 2a: Passagenvermahlung:

Die Suspension wird 3 mal durch die Mühle gepumpt, wobei Passagen 1 und 2 mit Mahlkugeln (Cer-stabilisierte Zirkonoxid-Kugeln, Schüttdichte 3,7 kg/l) 1,7 bis 2,4 mm, die dritte Passage mit Mahlkugeln 0,7 bis 1,2 mm (Cer-stabilisierte Zirkonoxid-Kugeln, Schüttdichte 3,7 kg/l) bei einem Durchsatz von 600 g Suspension pro Minute; das entspricht einer Verweilzeit von 130 bis 150 sec pro Passage, also einer Gesamtverweilzeit von 10 min. Die Mühle wird auf eine Umfangsgeschwindigkeit von 12 m/sec eingestellt. Die Mahltemperatur beträgt maximal 45°C.

### Beispiel 2b: Kreislaufvermahlung

1 Passage mit Mahlkugeln (Cer-stabilisierte Zirkonoxid-Kugeln, Schüttdichte 3,7 kg/l) 1,7 bis 2,4 mm (72 Vol.-% des Mahlraumes), dann Kreislaufvermahlung 30 bis 60 min mit einem Durchsatz von 900 g Suspension pro min, entsprechend einer Gesamtverweilzeit von 6 bis 12 min und 4 bis 8 theoretischen Passagen. Hierbei ist die Kontrolle des pH-Wertes nach jeder Passage bzw. bei Kreislauf-Vermahlung nach jeweils 30 min. erforderlich. Bei Anstieg des pH-Wertes über 6,5 muss durch Zugabe von Schwefelsäure entsprechend korrigiert werden. Die Mühle wird auf eine Umfangsgeschwindigkeit von 11 m/sec eingestellt.

Nach Ablauf von 45 Minuten werden zur Konditionierung 20g (0,2%) Nuosperse 2008, eines Fettaminsalzes eines ethoxylierten und partiell phosphatierten polymeren Oleylalkoholes zugegeben und weitere 15 min mit vermahlen. Sofern die Suspension zu dünnflüssig wird, muss mit Zugaben von maximal 50 g Natriumdihydrogenphosphat, ggfs. wieder zusätzlich Schwefelsäure, die Viskosität hochgestellt werden. Die Mahltemperatur beträgt maximal 45 °C.

### Beispiel 3 : Zusatz von Additiven

Nach der Feinstvermahlung gemäß Beispiel 2b wird das Pigment gewaschen, bis die Leitfähigkeit der überstehenden Flüssigkeit bei 500 bis 800 µS/cm liegt. Die Suspension wird mittels Zentrifugen-Dekanter oder Filterpresse auf einen Feststoffanteil von 55 bis 65% aufkonzentriert. Danach werden der Aufschlämmung weitere 2,5 % Natriumsulfat zugegeben, mit gleichen Gewichtsteilen Natriumphosphat und Schwefelsäure die Viskosität auf 620 Pa*s eingestellt eine weitere schnelle Passage (Verweilzeit < 60 sec) durch die Mühle mit Mahlkugeln (Cer-stabilisierte Zirkonoxid-Kugeln, Schüttdichte 3,7 kg/l) 1,7 bis 2,4 mm durchgeführt.

Man erhält ein hervorragend deckendes Gelbpigment in Form des Nickel-Antimon-Rutilgelbs mit im Aufstrich optimalem Glanz. Unterschiede zwischen Pigment gemäß Verfahren Beispiel 2A und Beispiel 2B sind nicht erkennbar.

### Beispiel 4: Zusatz von Additiven:

Nach der Feinstvermahlung gemäß Beispiel 2b wird das Pigment gewaschen, bis die Leitfähigkeit der überstehenden Flüssigkeit bei 500 bis 800 µS/cm liegt. Die Suspension wird mittels Zentrifugen-Dekanter oder Filterpresse auf einen Feststoffanteil von 60 % aufkonzentriert. Danach werden der Aufschlämmung weitere 3% nichtionisches, modifiziertes Fettsäurederivat (Handelsprodukt) sowie 100 g "Aerosil" zugegeben, und eine weitere schnelle Passage (Verweilzeit < 60 sec) durch die Mühle mit Mahlkugeln (Cer-stabilisierte Zirkonoxid-Kugeln, Schüttdichte 3,7 kg/l) 1,7 bis 2,4 mm (gleiche Füllung wie zuvor) durchgeführt.

Man erhält ein hervorragend deckendes Gelbpigment in Form des Nickel-Antimon-Rutilgelbs mit im Aufstrich optimalem Glanz. Ein befürchteter mattierender Effekt durch das Aerosil ist nicht feststellbar. Unterschiede zwischen Pigment gemäß Verfahren Beispiel 2A und Beispiel 2B sind nicht erkennbar.

### Beispiel 5 : Zusatz von Additiven

Nach der Feinstvermahlung gemäß Beispiel 2b wird das Pigment gewaschen, bis die Leitfähigkeit der überstehenden Flüssigkeit bei 500 bis 800 µS/cm liegt. Die Suspension wird mittels Zentrifugen-Dekanter oder Filterpresse auf einen Feststoffanteil von 60 % aufkonzentriert. Danach werden der Aufschlämmung weitere 2 % ein Polydimethylsiloxan (wässrige Emulsion) zur Absenkung der Abrasivität zugegeben, ferner 35 g "Aluminiumoxid C' der Firma Degussa (Handelsprodukt), und eine weitere schnelle Mahlpassage (Verweilzeit <60 sec) durch die Mühle mit Mahlkugeln (Cer-stabilisierte Zirkonoxid-Kugeln, Schüttdichte 3,7 kg/l) 1,7 bis 2,4 mm (gleiche Füllung wie zuvor) durchgeführt.

Man erhält nach Abtrennung ein hervorragend deckendes, brillantes Gelbpigment in Form des Nickel-Antimon-Rutilgelbs mit im Aufstrich optimalem Glanz. Unterschiede zwischen Pigment gemäß Verfahren Beispiel 2A und Beispiel 2B sind nicht erkennbar.

### Beispiele 6: Variationen der Hilfsmittel

Zur Darstellung der Unabhängigkeit der Pigmenteigenschaften gemäß dieser Erfindung können abweichend vom Wortlaut dieser Beispiele in fachmännisch sinnvollen Variationen die folgenden Hilfsmittel eingesetzt werden, ohne dass dieses im Unterschied zur DE-A-2 936 746 einen signifikant weiter verbessernden Einfluss auf das Ergebnis hat :

### Modifizierte Fettsäurederivate

**1.** Fettaminsalz eines polymeren Oleylalkohols, ethoxiliert und phosphatiert und
**2.** nichtionisches, modifiziertes Fettsäurederivat.

### Polysiloxanverbindungen

**1.** mit Polyethergruppen modifiziertes Siloxan
**2.** Alkylarylmodifiziertes Polysiloxan

### Nanodisperse Aluminiumoxide oder Kieselsäuren

Aluminiumoxid C (Degussa)
Aerosile
Als Mahlkugeln können zum Einsatz gelangen :
1,7 bis 2,4 mm Cer-stabilisierte Zirkonoxid-Kugel, Schüttdichte 3,7 kg/l
0,7 bis 1,2 mm Cer-stabilisierte Zirkonoxid-Kugel, Schüttdichte 3,7 kg/l
0,6 bis 0,8 mm Yttrium-stabilisierte Zirkonoxid-Kugel Schüttdichte 3,6 kg/l
0,8 bis 1,0 mm Yttrium-stabilisierte Zirkonoxid-Kugel Schüttdichte 2,8 kg/l
2,5 bis 2,8 mm Zirkonsilikat-Kugel, Schüttdichte 2,4 kg/l

### Beispiel 7: Auswertung

Nach der Filtration und Trocknung erhält man ein brillantes, hochdeckendes und feinstteiliges Gelbpigment in Form des Nickel-Antimon-Rutilgelbs. Im Vergleich stellt sich das Pigment gemäß Beispiel 4 wie folgt dar (Tabelle I) :

**Tabelle I**

| (mittlere Teilchengröße und Glanz) | | | |
|---|---|---|---|
| Material | Handelsprodukt A (strahlvermahlen) | Nickel-Antimon-Rutilgelb (nassvermahlen) Erfindung | Handelsprodukt TY-70 der Firma Ishihara |
| Mahlprozess | Standard-Type strahlvermahlen | Versuch: keramisch ausgekleidete Lehmann- "FM" | |
| mittlere Teilchengröße d₅₀ | **0,66 µm** | **0,31 µm** | **0,87 µm** |
| Glanz 20°/60° (D65) | **29,2 / 71,1** | **62,5/87,9** | **40,9 / 78,6** |

Bezüglich der Teilchengröße der oben aufgezeigten verglichenen Produkte sei auf die der Anlage beiliegende Fig. 1 verwiesen. Das beschriebene Handelsprodukt A wurde nach gängigen mehrstufigen Strahlenmahlverfahren erhalten, bis sich keine Verbesserung mehr erzielten ließ. Kornform und Partikelgröße lässt sich vergleichend aus den beiliegenden Figuren 2, 3 und 4 in rasterelektronen-mikroskopischen Aufnahmen ersehen. Man erkennt die rundgeschliffene Form, die einen Teil der günstigen anwendungstechnischen Eigenschaften bewirkt.

### Beispiele 8: Unfreiwillige Erfolgsbestätigung für erfindungsgemäß verbessertes Nickel-Antimon-Rutilgelb-Pigment

Die Wirksamkeit der Erfindung wird vor allem durch den folgenden, im übrigen schnell und ohne weitere störende Auswirkungen behobenen Vorfall (das Pigment ist auch in feinster Form auslaugungsbeständig) bei der Entwicklung des Produktes dokumentiert, auch wenn es als Beispiel unorthodox wirken mag:
Nach der Auswertung entsprechender Vorergebnisse gemäß Beispielen 1 - 6 erfolgte eine Pilotproduktion. Dabei gelangte durch eine Fehlhandlung hochfeines Nickel-Antimon-Rutilgelb-Pigment in geringen Mengen aus der Mühle in den Vorlauf des Abwasserbeckens (Klarseite). Das Pigment setzte sich als ein extrem gut deckender, gleichmäßiger und intensiv leuchtender zitronengelber Belag auf den Wänden und Armaturen der Abwasser- Aufbereitungsanlage ab. Das "Ergebnis" sah aus wie mit der Rolle aufgetragen oder sauber deckend gespritzt. Der hellgrüne Untergrund der Bauten und die verschiedenfarbigen Rohre, Armaturen und Kabel wiesen im Mittagssonnenlicht keine Farbtonnuancierungen im Gelbton mehr auf. Die farbliche Wirkung ließ zunächst auf dotiertes Bismuthvanadat oder gar Bleichromat schließen, was erst mit Hilfe der chemischen Analytik widerlegt werden konnte. Bedenkt man, dass all dieses ohne Hilfsmittel geschah, wird der praktische Wert der Verbesserung durch die Erfindung erst recht deutlich.

### Beispiel 9: Vergleich der Glanzmesswerte der vorstehend gegenübergestellten Produkte Handelsprodukt A, erfindungsgemäßes Nickel-Antimon-Rutilgelb und handelsübliches Pigment Ishihara TY70

Die Glanzmesswerte werden bestimmt nach DIN 67 530. Als Prüfsystem wurde ein Alkyd-Melamin-Einbrennlack (55%-Feststoffanteil) verwendet. Dazu wurden 80 g Lack, 20 g Pigment und 120 g Glasperlen (2 mm) in einen Polypropylen-Becher eingewogen und 20 min auf einer Scandex-Schüttelmaschine geschüttelt. Der pigmentierte Lack wurde mit Hilfe eines Filmziehgerätes (Fa. Erichsen Modell 509 MCIII) mit einer Nassschichtdicke von 200 µm auf eine weiße Prüfkarte (Fa. Leneta Form WH) aufgezogen und 30 min bei 130°C eingebrannt. Anschließend erfolgte die Bestimmung der Reflektometerwerte mit Normlichtart D 65.

**Tabelle II**

| (Reflektometerwerte) | | |
|---|---|---|
| (Normlichtart D65) | 20°-Reflektometerwert | 60°-Reflektometerwert |
| Handelsübliches Pigment A | **29,2** | **71,1** |
| erfindungsgemäßes Produkt | **62,5** | **87,9** |
| Nickel-Antimon-Rutilgelb (300 nm) | | |
| handelsübliches Pigment Ishihara TY70. | **40,9** | **78,3** |

### Beispiel 10: Bestimmung des Deckvermögens

Die Bestimmung des Deckvermögens erfolgte nach DIN 55 987 mittels Normlicht D65 (Tageslicht Nordhalbkugel, entsprechend Emissionsstrahlung des auf 6504 K erhitzten Schwarzen Körpers), anhand eines oxidativ trocknenden Alkydlackes. Dazu wurden 70 g Lack, 30 g Pigment und 120 g Glasperlen (2 mm) in einen Polypropylen-Becher eingewogen und 20 min auf einer Scandex-Schüttelmaschine geschüttelt. Der pigmentierte Lack wurde mit Hilfe eines Filmziehgerätes (Fa. Erichsen Modell 509 MCIII) mit einem Stufenrakel TYP 421/II der Fa. Erichsen mit Nassschichtdicken von 60 bis 400 µm auf schwarz-weiße Kontrastkarten aufgezogen. Nach dem Trocknen des Lackfilms wurde der Farbtonabstand DE über schwarzem und weißem Untergrund nach DIN 6174 ermittelt und gegen den Reziprokwert der Schichtstärke grafisch aufgetragen. Daraus wurde die Schichtstärke ermittelt, bei der der Farbtonabstand DE=1 ist. Dieses wurde sowohl für die beschriebenen Nickeltitanpigmente als auch für ein Titandioxidpigment der Rutilmodifikation bestimmt. Das Deckvermögen in der Tabelle II wird angegeben relativ zu Titandioxid. Die Konzentration der geprüften Pigmente lag unterhalb der kritischen Pigmentvolumenkonzentration (CPVK).

**Tabelle III**

| (Deckvermögen, bezogen auf ein Standard-Titandioxid-Rutilpigment als Vergleichssubstanz) | |
|---|---|
| (Normlicht D 65) | Deckvermögen |
| handelsübliches Pigment A | 89% |
| erfindungsgemäßes Pigment Nickel-Antimon-Rutilgelb (300 nm) | **121%** |
| handelsübliches Pigment Ishihara TY70 | 82% |

## Patentansprüche

1. Feinteiliges, brillantes und hochdeckendes Pigment auf Rutil-Basis, **dadurch gekennzeichnet, dass** es ein Nickel-Antimon-Rutilgelb einer Farbsättigung C* nach DIN 5033 von 52 bis 55 bei einem Farbtonwinkel h von 96° bis 98° und eine Korngrößenverteilung mit Teilchendurchmessern zwischen 50 und 1000 nm und bei mono-, bi-, tri- oder oligomodaler Häufigkeitsverteilung ein Hauptmaximum zwischen 230 und 400 nm aufweist, wobei bei einer bi- oder mehrmodalen Häufigkeitsverteilung gegebenenfalls ein Nebenmaximum mit weniger als 25% des Hauptmaximums zwischen 400 und 1000 nm auftritt.

2. Pigment nach Anspruch 1, **dadurch gekennzeichnet, dass** der mittlere Teilchendurchmesser zwischen 80 und 1000 nm, insbesondere zwischen 80 und 600 nm liegt und/oder ein Nebenmaximum mit weniger als 25% des Hauptmaximums zwischen 400 und 900 nm auftritt.

3. Pigment nach Anspruch 2, **dadurch gekennzeichnet, dass** der mittlere Teilchendurchmesser zwischen 120 und 600 nm liegt.

4. Pigment nach einem der Ansprüche 1 bis 3, **dadurch gekennzeichnet, dass** es eine asymmetrisch geformte mono-modale Häufigkeitsverteilung des Teilchendurchmessers mit einem Maximum zwischen 250 und 390 nm, insbesondere zwischen 280 und 340 nm, aufweist.

5. Pigment nach einem der Ansprüche 1 bis 4, **dadurch gekennzeichnet, dass** es nach DIN 67 530 unter Verwendung von Normlicht "D65" und unter den in Beispiel 10 genannten Versuchsbedingungen einen 20°-Reflektometer-Glanzwert von mindestens 42 und einen 60°-Reflektometer-Glanzwert von mindestens 80 aufweist, insbesondere einen 20°-Reflektometer-Glanzwert von mindestens 50, insbesondere 55 bis 70, und einen 60°-Reflektometer-Glanzwert von mindestens 83, insbesondere 83 bis 93, ohne einen notwendigen Einsatz von auf dem Pigment verbleibenden Hilfsstoffen aufweist.

6. Pigment nach einem der Ansprüche 1 bis 5, **dadurch gekennzeichnet, dass** das Deckvermögen nach DIN 55 987 unter Verwendung von Normlicht "D65" und den in Beispiel 11 genannten Versuchsbedingungen mehr als 100%, insbesondere mehr als 110% beträgt, bezogen auf ein Standard Titandioxid-Rutilpigment als Vergleichssubstanz.

7. Pigment nach Anspruch 6, **dadurch gekennzeichnet, dass** das Deckvermögen nach DIN 55 987 zwischen 115 und 130% liegt.

8. Verfahren zur Herstellung eines feinteiligen, brillanten und hochdeckenden Pigments auf Basis eines Nickel-Antimon-Rutilgelbes nach mindestens einem der Ansprüche 1 bis 7, **dadurch gekennzeichnet, dass** das Nickel-Antimon-Rutilgelb mittels Hochleistungs-Vermahlung in wässriger Suspension in einer eisenfreien und resistent ausgekleideten Rührwerkskugelmühle so lange behandelt wird, bis sich eine den vorangehenden Ansprüchen entsprechende Korngrößenverteilung eingestellt hat.

9. Verfahren nach Anspruch 8, **dadurch gekennzeichnet, dass** das Mahlaggregat und die Mahlwerkzeuge eine abriebbeständige und inerte Beschichtung aufweisen.

10. Verfahren nach Anspruch 8 oder 9, **dadurch gekennzeichnet, dass** in dem Mahlaggregat eisenfreie und resistente Mahlperlen eines Durchmessers von etwa 0,2 bis 1,7 mm, insbesondere von etwa 0,5 bis 1,2 mm, zum Einsatz gelangen.

11. Verfahren nach einem der Ansprüche 8 bis 10, **dadurch gekennzeichnet, dass** das Feinstvermahlen bei Temperaturen zwischen etwa 20 und 90°C, insbesondere zwischen etwa 40 und 60°C, durchgeführt wird.

12. Verfahren nach einem der Ansprüche 8 bis 11, **dadurch gekennzeichnet, dass** das Feinstvermahlen in einem Rezirkulationsverfahren durchgeführt wird, wobei die durchschnittliche Verweilzeit des Mahlgutes in der Rührwerkskugelmühle 4 bis 44 min, insbesondere 10 bis 18 min, beträgt.

13. Verfahren nach einem der Ansprüche 8 bis 12, **dadurch gekennzeichnet, dass** die Umfangsgeschwindigkeit des Rotors der Rührwerkskugelmühle 5 bis 19 m/s, insbesondere 10 bis 12 m/s beträgt.

14. Verfahren nach einem der Ansprüche 8 bis 13, **dadurch gekennzeichnet, dass** der Füllgrad der Rührwerkskugelmühle an Mahlkörper etwa 60 bis 90 Vol.-%, insbesondere etwa 70 bis 80 Vol.-% beträgt.

15. Verfahren nach einem der Ansprüche 8 bis 14, **dadurch gekennzeichnet, dass** dem Verfahren eine Vorzerkleinerung in einer Kugelmühle aus resistentem Material vorgeschaltet ist, die einen Metallkontakt des Mahlgutes weitgehend ausschließt.

16. Verfahren nach Anspruch 15, **dadurch gekennzeichnet, dass** das resistente Material ein inertes und abriebfestes Material darstellt.

17. Verfahren nach Anspruch 15, **dadurch gekennzeichnet, dass** das resistente Material ein wärmeleitfähiges keramisches Material darstellt.

18. Verfahren nach einem der Ansprüche 8 bis 17, **dadurch gekennzeichnet, dass** das resistente Auskleidungsmaterial der Rührwerkskugelmühle einen inerten und abriebfesten Kunststoff oder ein inertes und abriebfestes keramisches Material darstellt.

## Claims

1. Finely divided, brilliant, and highly opaque rutile-based pigment, **characterized in that** it is a nickel-antimony rutile yellow featuring a color saturation C* of 52 to 55 acc.to DIN 5033, at a color hue angle h of 96° to 98° and a particle size distribution with a diameter range between 50 and 1000 nm, which in case of a mono-, bi-, tri or oligomodal-type maxima distribution may feature a majorizing (primary) maximum between 230 and 400 nm, and a secondary maximum of less than 25% of the primary maximum in a diameter range between 400 and 1000 nm in case of bi- or oligomodal distributions.

2. Pigment according to claim 1 wherein the mean particle diameter is found between 80 and 1000 nm, in particular between 80 and 600 nm, and/or wherein a secondary maximum at less than 25% of the primary maximum occurs between 400 and 900 nm.

3. Pigment according to claim 2 **characterized by** a mean particle diameter between 120 and 600 nm.

4. Pigment according to any of claims 1 through 3, featuring an asymmetrically shaped mono-modal-type maxima distribution of particle size diameters with a maximum between 250 and 390 nm, preferably between 280 and 340 nm.

5. Pigment according to any of claims 1 through 4, which, when subject to application of standard DIN 67530 illuminant "D65" for trial conditions enumerated in Example 10, is featuring a 20° reflectometer gloss value of at least 42, and a 60° reflectometer value of at least 80, in particular a 20° reflectometer gloss value of at least 50, in particular 55 through 70, and a 60° reflectometer gloss value of at least 83, in particular 83 through 93, without requiring application of auxiliary agents that remain on the pigment.

6. Pigment according to any of claims 1 through 5, **characterized in** accordance with DIN 55987 using standard illuminant "D65" for trial conditions enumerated in Example 11, by a hiding power in excess of 100%, in particular exceeding 110%, relative to a standard titanium dioxide rutile pigment as comparative substance.

7. Pigment according to claim 6 featuring a hiding power between 115% and 130% according to DIN 55987.

8. Process to manufacture a finely divided, brilliant, and highly opaque pigment based on nickel-antimony rutile yellow as specified by any of claims 1 through 7, wherein an nickel-antimony rutile yellow pigment is subjected to high-speed milling of its aqueous suspension in an agitator ball mill featuring resistant iron-free lining, until any one of the particle size specifications in preceding claims has been attained.

9. Process according to claim 8, wherein the milling device and grinding tools are equipped with a wear-resistant and inert lining.

10. Process according to any of claims 8 or 9, wherein iron-free and resistant grinding beads with a diameter if about 0.2 to 1.7 mm, in particular 0.5 to 1.2 mm, are used in said milling device.

11. Process according to any of claims 8 through 10 wherein the ultrafine grinding is performed at temperatures between about 20 and 90°C, in particular between 40 and 60°C.

12. Process according to any of claims 8 through 11 wherein the grinding is performed using a recirculation flow scheme, the mean dwell time of the ground material in the agitator ball mill being 4 to 44 minutes, in particular 10 to 18 minutes.

13. Process in accordance with any of claims 8 through 13, wherein the perimeter speed of the rotor in said agitator ball mill is 5 to 19 m/s, in particular 10 to 12 m/s.

14. Process in accordance with any of claims 8 through 13, wherein the filling level of said agitator ball mill with grinding bodies is about 60 to 90 vol.-%, in particular 70 to 80 vol.-%.

15. Process according to any of claims 8 through 14, wherein pre-comminution occurs upstream of said process in a ball mill equally made of resistant material which prevents the ground material from coming into contact with metal.

16. Process according to claim 15, wherein said resistant material is an inert and abrasion-resistant material.

17. Process according to claim 15, wherein the resistant material is a heat-conductive ceramic material.

18. Process in accordance with any of claims 8 through 17, wherein said resistant lining material for the agitator ball mill is an inert and abrasion-resistant polymer plastic or an inert and wear-resistant ceramic material.

## Revendications

1. Pigment finement divisé, brillant et à haut pouvoir couvrant, à base de rutile, cartactérisé en qu'il comprend un jaune de nickel-antimoine-rutile ayant une saturation de couleur C* selon la norme DIN 5033 de 52 à 55 pour un angle de teinte h de 96° à 98° et présente une répartition granulométrique des particules avec des diamètres compris entre 50 et 1000 nm et, pour une distribution de fréquence monomodale, bimodale, trimodale ou oligomodale, un maximum principal compris entre 230 et 400 nm, un maximum secondaire de moins de 25 % du maximum principal existant éventuellement entre 400 et 1000 nm pour une distribution de fréquence bimodale ou de modalité supérieure.

2. Pigment suivant la revendication 1, **caractérisé en ce que** le diamètre moyen des particules se situe entre 80 et 1000 nm, en particulier entre 80 et 600 nm et/ou un maximum secondaire de moins de 25 % du maximum principal existe entre 400 et 900 nm.

3. Pigment suivant la revendication 2, **caractérisé en ce que** le diamètre moyen des particules se situe entre 120 et 600 nm.

4. Pigment suivant l'une des revendications 1 à 3, **caractérisé en ce qu'**il présente une distribution de fréquence monomodale de forme asymétrique du diamètre de particules avec un maximum compris entre 250 et 390 nm, en particulier compris entre 280 et 340 nm.

5. Pigment suivant l'une des revendications 1 à 4, **caractérisé en ce qu'**il présente, selon la norme DIN 67 530 en lumière normalisée "D65" et dans les conditions expérimentales indiquées dans l'exemple 10, une brillance réflectométrique sous 20° au moins égale à 42 et une brillance réflectométrique sous 60° au moins égale à 80, en particulier une brillance réflectométrique sous 20° au moins égale à 50, particulièrement de 55 à 70, et une brillance réflectométrique sous 60° au moins égale à 83, particulièrement de 83 à 93, sans nécessiter l'utilisation de substances auxiliaires subsistant sur le pigment.

6. Pigment suivant l'une des revendications 1 à 5, **caractérisé en ce que** le pouvoir couvrant selon la norme DIN 55 987 en lumière normalisée "D65" et dans les conditions expérimentales mentionnées dans l'exemple 11 s'élève à plus de 100 %, en particulier à plus de 110 %, par rapport à un pigment de rutile au dioxyde de titane de référence utilisé comme substance de comparaison.

7. Pigment suivant la revendication 6, **caractérisé en ce que** le pouvoir couvrant selon la norme DIN 55 987 se situe entre 115 et 130 %.

8. Procédé de production d'un pigment finement divisé, brillant et à haut pouvoir couvrant, à base de jaune de nickel-antimoine-rutile suivant au moins l'une des revendications 1 à 7, **caractérisé en ce que** le jaune de nickel-antimoine-rutile est traité par broyage à haut rendement en suspension aqueuse dans un broyeur-mélangeur à billes non ferreux et à revêtement résistant, jusqu'à ce que se soit établie une répartition granulométrique correspondant aux revendications précédentes.

9. Procédé suivant la revendication 8, **caractérisé en que** l'unité et les outils de broyage présentent un revêtement inerte doué de résistance à l'abrasion.

10. Procédé suivant la revendication 8 ou 9, **caractérisé en que** des perles de broyage non ferreuses et résistantes, d'un diamètre d'environ 0,2 à 1,7 mm, en particulier d'environ 0,5 à 1,2 mm, sont utilisées dans l'unité de broyage.

11. Procédé suivant l'une des revendications 8 à 10, **caractérisé en que** la pulvérisation est conduite à des températures comprises entre environ 20 et 90°C, en particulier entre environ 40 et 60°C

12. Procédé suivant l'une des revendications 8 à 11, **caractérisé en que** la pulvérisation est conduite selon un processus de recyclage, la durée moyenne de séjour de la matière à broyer dans le broyeur-mélangeur à billes étant de 4 à 44 min, en particulier de 10 à 18 min.

13. Procédé suivant l'une des revendications 8 à 12, **caractérisé en que** la vitesse périphérique du rotor du broyeur-mélangeur est de 5 à 19 m/s, en particulier de 10 à 12 m/s.

14. Procédé suivant l'une des revendications 8 à 13, **caractérisé en que** le degré de charge en éléments de broyage du broyeur-mélangeur est d'environ 60 à 90 % en volume, en particulier d'environ 70 à 80 % en volume.

15. Procédé suivant l'une des revendications 8 à 14, **caractérisé en ce que** sa mise en oeuvre est précédée d'un broyage préliminaire dans un broyeur à billes en matériau résistant, qui exclut largement un contact de la matière à broyer avec le métal.

16. Procédé suivant la revendication 15, **caractérisé en ce que** le matériau résistant consiste en un matériau inerte et résistant à l'abrasion.

17. Procédé suivant la revendication 15, **caractérisé en ce que** le matériau résistant consiste en un matériau céramique doué de conductibilité thermique.

18. Procédé suivant l'une des revendications 8 à 17, **caractérisé en que** le matériau de revêtement résistant du broyeur-mélangeur à billes consiste en une matière synthétique inerte et résistant à l'abrasion ou en une matière céramique inerte et résistant à l'abrasion.
